# FASCICULE DE BREVET EUROPEEN

(11) **EP 1 226 923 B1**
(45) Date de publication et mention de la délivrance du brevet: **30.03.2005**
(21) Numéro de dépôt: 02290201.9
(22) Date de dépôt: 29.01.2002
(51) Int. Cl.: B29C 70/56, B29C 33/12

(54) **Pièce mécanique en forme de feuille en élastomère renforcée, son procédé de fabrication et moule pour ladite fabrication**
Verstärktes elastomerfolienartiges mechanisches Werkstück, Verfahren und Formwerkzeug zu dessen Herstellung
Mechanical part made of a reinforced elastomeric sheet, manufacturing process and mould for its manufacture

(30) Priorité: 29.01.2001 FR 0101170
(43) Date de publication de la demande: 31.07.2002
(73) Titulaire: CONSTRUCTIONS INDUSTRIELLES DE LA MEDITERRANEE- CNIM, F-75008 Paris (FR)
(72) Inventeur: Ponsot, Bernard, 83500 La Seyne sur Mer (FR); Cortot, Bernard, Rue Paul Aréne 83220 Le Pradet (FR)
(74) Mandataire: Peaucelle, Chantal

(56) Documents cités:
- WO-A-91/04145
- DE-A- 2 548 751
- DE-U- 8 621 129
- US-A- 4 434 124
- US-A- 4 435 349
- PATENT ABSTRACTS OF JAPAN vol. 015, no. 491 (M-1190), 12 décembre 1991 (1991-12-12) & JP 03 213337 A (MITSUBISHI HEAVY IND LTD), 18 septembre 1991 (1991-09-18)

## Description

L'invention concerne un procédé de fabrication de pièces mécaniques souples en forme de feuille en élastomère, renforcée par une structure interne sous forme de fibres. L'invention concerne également un moule destiné à la mise en oeuvre d'un tel procédé de fabrication ainsi que des pièces mécaniques telles qu'obtenues par le procédé.

Dans la description qui va suivre, on désigne par "feuille", un élément qui n'est pas nécessairement plan mais dont l'une des dimensions, que l'on appelle épaisseur, est inférieure aux deux autres dimensions que sont la largeur et la longueur, ces deux dernières dimensions n'étant pas nécessairement identiques puisqu'adaptées aux applications envisagées pour les pièces mécaniques.

Une feuille selon l'invention peut par exemple se présenter sous la forme d'une bande, de plus ou moins grande largeur. Cette feuille peut également avoir intrinsèquement une épaisseur qui varie dans le sens de sa longueur et/ou de sa largeur.

Parmi les applications envisageables pour ce type de feuilles, on peut citer la réalisation de jupes de joints de type à coussin d'air.

Actuellement, de telles pièces mécaniques en forme de feuilles sont fabriquées par un procédé de dépôt manuel de couches successives de caoutchouc synthétique, tel que du polychloroprène commercialement connu sous la marque "Néoprène", prenant en sandwich des couches de fibres ou de tissus.

Ainsi, pour obtenir des pièces mécaniques en forme de feuille de faible épaisseur, on dépose successivement, sur un moule, une première couche externe de caoutchouc d'épaisseur comprise entre 0,5 et 1 mm, puis une ou plusieurs couches de fibres d'épaisseur comprise entre 1 et 1,2 mm, en alternance avec des couches internes, ou couches de liaison, de caoutchouc d'épaisseur comprise entre 0,3 et 0,5 mm, et enfin une deuxième et dernière couche externe de caoutchouc d'épaisseur comprise entre 0,5 et 1 mm. L'ensemble est ensuite vulcanisé.

Or, cette succession de dépôts de couches est effectuée à la main. Outre le fait que cela implique un coût de revient nécessairement élevé, ce procédé ne permet pas d'obtenir une pièce d'épaisseur finale faible d'une part, et contrôlée d'autre part.

En effet, les tolérances propres à chacune des couches déposées s'additionnent ; ainsi, pour un objectif d'épaisseur de feuille de 5 mm, l'épaisseur finale est comprise entre 4 et 7 mm, soit une tolérance de plus de 20% et même de 30%.

Le procédé actuel présente d'autres inconvénients majeurs liés au fait que les fibres de la structure de renfort restent sèches, c'est-à-dire qu'elles ne sont pas mouillées par le caoutchouc.

On a constaté que sous l'action d'une tension exercée dans le sens des fibres, la pièce peut se déchirer, la structure de renfort se désolidarisant alors du caoutchouc.

Par ailleurs, lorsque l'on fait une découpe ou dans le cas où une coupure se produit transversalement dans la pièce, les fibres s'imprègnent de tout fluide avec lequel elles sont ou viendraient à entrer en contact ; ce fluide remonte alors par capillarité le long des fibres, fragilisant ainsi d'autant plus la pièce.

La nature sèche des fibres pose ainsi des problèmes lorsque l'on utilise une telle pièce dans un milieu gazeux sous pression ; c'est le cas, par exemple, d'essais dans le cadre desquels on teste la pièce sous pression, puis on la décomprime avec un gradient souvent plus rapide que pour la mise en pression : il se crée alors des poches de rétention de gaz qui, en se dilatant, délaminent les couches.

Par ailleurs, la technique actuelle est également limitée, dans le cas où l'on souhaite obtenir des pièces de faible dureté.

US-A-4 435 349 concerne un procédé selon le préambule de la revendication 1 pour fabriquer un composite à haute résistance constitué d'une natte de renfort imprégnée d'un élastomère polyuréthane moulé par injection. La natte de renfort est disposée dans un moule avant l'injection d'élastomère. Lorsqu'une seule natte est prévue, des butées d'espacement sont prévues dans le moule pour maintenir la natte lors de l'injection. Lorsque deux ou plusieurs nattes sont prévues, aucune butée d'espacement n'est nécessaire. Le maintien en position de la structure de renfort proposé par ce document n'est pas suffisant pour assurer une bonne précision de fabrication, notamment lorsque la structure de renfort est constituée de fibres qui ne sont pas assemblées ou liées les unes aux autres.

DE-U-86 21 129.3 concerne un dispositif selon le préambule de la revendication 7 pour maintenir, dans un moule de fabrication de chaussure, une coquille de protection en acier. Des butées d'espacement sont prévues contre lesquelles prend appui la coquille rigide. Une zone de la surface interne de la coquille est munie d'une denture pour coopérer avec un pion du moule et assurer le maintien de la coquille rigide. Une telle solution ne peut convenir pour une structure de renfort constituée de fibres, et donc relativement flexible.

L'invention vise à résoudre l'ensemble des inconvénients précités en proposant un procédé de fabrication de pièces mécaniques souples en forme de feuille du type précité, ce procédé, de mise en oeuvre plus économique que le procédé actuel, permettant de mieux contrôler l'épaisseur finale de la pièce ainsi que la disposition, dans la pièce, des fibres ou du tissu de renfort disposés dans cette épaisseur, et permettant également d'améliorer la cohésion entre la structure de renfort et les couches d'une part, entre les couches elles-mêmes d'autre part, ainsi que les caractéristiques de résistance à la traction de la pièce dans la direction de ces fibres ou tissu.

La piece telle qu'obtenue par le procédé de l'invention présente également une grande souplesse dans tout plan perpendiculaire à la direction de ces fibres ou tissu et coupant la pièce dans le sens de son épaisseur afin de pouvoir plier lesdites fibres, ainsi qu'une épaisseur finale totalement maîtrisée et plus faible que l'épaisseur minimale que l'on puisse obtenir avec le procédé actuel.

Suivant l'invention, le procédé de fabrication comprend les étapes suivantes :
- on dispose la structure de renfort à l'intérieur du volume libre d'un moule, ce moule comprenant au moins deux parties définissant, par leur empreinte respective, ledit volume libre ;
- on met en oeuvre des moyens pour maintenir la structure de renfort à une distance donnée d'au moins une des empreintes ;
- on introduit l'élastomère sous forme liquide à l'intérieur du volume libre ;
- on procède à la cuisson de l'élastomère ;
- on extrait du moule la pièce élastomère renforcée ainsi obtenue.

Le positionnement et le maintien de la structure de renfort préalablement à l'introduction de l'élastomère permettent de définir précisément la disposition recherchée pour cette structure dans la pièce, dont l'épaisseur sera parallèlement déterminée par le volume libre défini par les empreintes des deux parties constitutives du moule.

Les variations d'épaisseur observées dans les feuilles constituant les pièces actuelles ainsi que les phénomènes de déplacement des fibres, qui sont inhérents aux procédés actuels de dépôts, à la main, de couches successives sont bien évidemment supprimés.

La présente invention concerne également toute pièce mécanique souple en forme de feuille en élastomère telle qu'obtenue par le procédé de l'invention, et dans laquelle la structure de renfort est noyée et mouillée par un matériau élastomère monobloc dont les dimensions extérieures déterminent celles de la pièce, et disposée à des distances prédéterminées des dites dimensions extérieures, lesdites distances étant obtenues avec une tolérance de 10% maximale ; l'épaisseur de la pièce est elle-même obtenue de préférence avec une tolérance de 15% maximale.

La pièce selon l'invention se présente comme un véritable composite dont les caractéristiques sont supérieures à celles de chacun de ces composants. En particulier, elle présente une très bonne résistance aux efforts qui peuvent s'exercer sur elle.

L'invention vise également un moule tel que defini dans la revendication 7, pour la fabrication d'une telle pièce en forme de feuille.

D'autres avantages et particularités de l'invention résulteront de la description qui va suivre, donnée à titre d'exemples non limitatifs et faite en référence aux figures annexées dans lesquelles :
- la figure 1 est une vue schématique en coupe d'un moule pour la mise en oeuvre du procédé selon l'invention pour obtenir une pièce de section en forme de "U" et qui peut être refermée sur elle-même pour constituer un tore, réalisant ainsi une jupe de joints de type à coussin d'air ;
- la figure 2 est une vue schématique en coupe d'une variante d'un moule pour la mise en oeuvre du procédé selon l'invention pour obtenir une pièce de section en forme de "U", comme pour la figure 1, mais en disposition inversée et en cours de moulage.

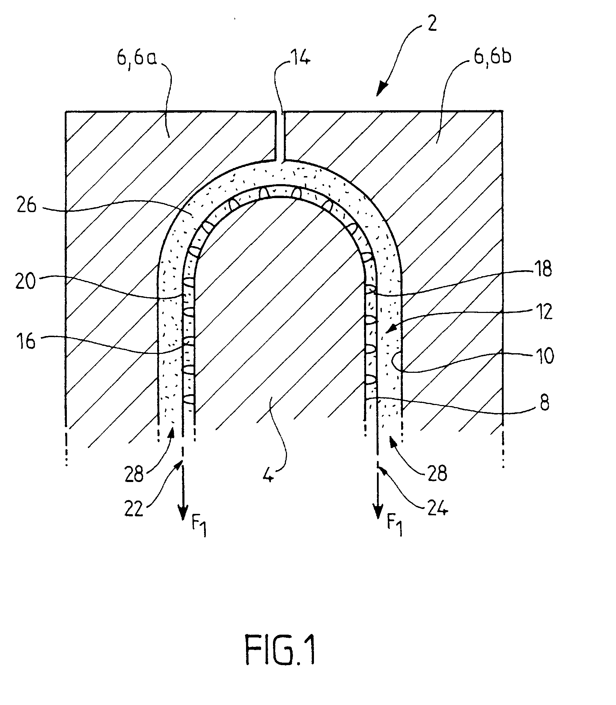

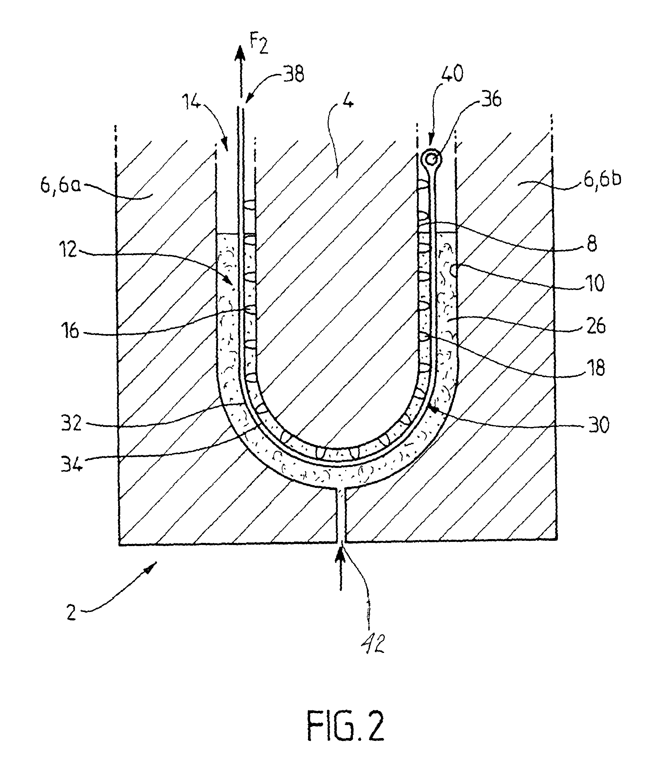

Les éléments ayant une fonction identique sont repérés, sur les figures 1 et 2, par des références numériques identiques.

Sur la figure 1, on peut visualiser un moule 2, formé de deux parties, un noyau central 4 et une partie externe 6.

Les empreintes respectives 8, 10 du noyau central 4 d'une part et de la partie externe 6 d'autre part définissent un volume libre 12 en forme de "U" comme sur la figure 1, ou de "U" renversé comme sur figure 2.

De telles empreintes peuvent être de toute forme correspondant à celle de la pièce mécanique souhaitée.

La partie externe 6 du moule 2 est elle-même constituée par deux éléments 6a et 6b.

Entre ces deux éléments 6a et 6b se trouve, dans l'exemple de la figure 1, un évent 14 permettant de relier le volume libre 12 à l'extérieur du moule 2 et, dans l'exemple de la figure 2, un canal 42 d'introduction de l'élastomère 26.

L'empreinte 8 du noyau central 4 comporte des éléments de calage 16, 18 qui s'étendent en saillie à partir de ladite empreinte 8.

Dans un mode préférentiel, ces éléments de calage mécanique 16, 18 sont régulièrement espacés les uns des autres au niveau de l'empreinte 8.

La hauteur des éléments de calage 16, 18 mesurée en section transversale à partir de l'empreinte 8 du noyau central 4 dépend du besoin d'inertie recherchée pour la pièce mécanique finale, du type de fibres 20 utilisées, de la nature de l'élastomère (on recherche en effet de préférence une disposition suivant l'axe neutre d'inertie de la pièce quand l'élastomère est rigide) et du besoin d'enrobage de la structure de renfort 20 pour protéger cette dernière. De préférence, cette hauteur est comprise entre la moitié et le tiers de l'épaisseur du volume libre du moule.

La structure de renfort 20 est disposée sur les éléments de calage 16, 18 et est maintenue, comme l'indique le schéma de la figure 1, par ses extrémités 22 et 24, par un dispositif (non représenté) permettant sa mise sous tension représentée par les deux flèches F₁.

Il est également envisageable d'enrouler l'une des extrémités de la structure de renfort 20 autour d'une pièce de fixation solidaire du moule 2.

La hauteur des éléments de calage 16, 18 combinée au dispositif de mise sous tension permet de définir avec précision le positionnement de la structure de renfort 20 dans le volume libre 12.

La structure de renfort 20 est obtenue à partir de fibres sèches, tissées ou non, lesdites fibres sèches comprenant au moins un élément choisi parmi le groupe suivant : fibres de verre, fibres de carbone, fibres aramides connues entre autres sous la dénomination commerciale "Kevlar", ces dernières fibres 20 étant choisies de préférence avec un élastomère 26 de type polyuréthanne.

Le choix du type de fibres 20 est en fait fonction de la résistance à la traction recherchée, de leur tenue à la température lors du moulage si l'on souhaite effectuer celui-ci sous tension, et de l'inertie que l'on veut donner à la pièce mécanique finale.

De plus, au-delà du choix de la nature des fibres constituant la structure de renfort 20, la densité et la disposition des fibres 20 doivent être étudiées et définies en fonction de la direction et de l'importance de la traction à laquelle sera soumise la pièce mécanique.

Ainsi, pour une traction suivant une seule direction, on pourra ne disposer que des couches de fibres 20 unidirectionnelles ; dans le cas où l'on utilise au moins deux couches, celles-ci peuvent former un angle de 2° de part et d'autre de la direction de traction afin d'obtenir un tissu légèrement croisé.

Dans la configuration particulière représentée à la figure 2, la structure de renfort 30 est disposée sous forme de deux couches 32 et 34 par le biais d'un enroulement de la même nappe de fibres à une des extrémités 40 de la structure de renfort 30 autour d'une pièce de fixation 36, qui peut être solidaire du moule 2.

Dans une telle configuration, la mise sous tension est assurée au niveau de l'autre extrémité 38 de la structure de renfort 30, par l'exercice d'une force représentée par la flèche F₂, l'autre extrémité 40 de la structure de renfort 30 étant maintenue, grâce à l'enroulement, au niveau de la pièce de fixation 36.

Après avoir disposé la structure de renfort 20, 30 sur les éléments de calage 16, 18, on peut procéder à l'introduction de l'élastomère 26 sous forme liquide à l'intérieur du volume libre 12.

De préférence, l'élastomère 26 comprend au moins une résine thermodurcissable, qui peut être une résine de polyuréthanne.

L'introduction de l'élastomère 26 se fait par la base du moule 2, soit au niveau de l'entrée 28 du volume libre 12 pour la configuration du moule 2 représenté à la figure 1, soit au niveau du canal 42 d'introduction pour une configuration telle que représentée à la figure 2.

Dans la configuration de la figure 2, l'exercice d'une traction au niveau de l'extrémité 38 de la structure de renfort 20 permet également de drainer l'élastomère 26, ce qui assure la fonction d'évent 14.

Cette introduction se fait par injection suivant un débit régulé sous faible pression, cette dernière étant seulement nécessaire pour compenser les pertes de charge freinant l'introduction de l'élastomère 26.

On utilise en fait des pompes volumétriques pour permettre de pousser l'élastomère 26 de façon à remplir tout le volume libre 12 dans un temps donné.

Au fur et à mesure de l'introduction de l'élastomère 26 dans le volume libre 12, l'air initialement présent dans le volume libre 12 est chassé par l'évent 14.

Le fait de procéder à une injection sous faible pression permet, avec le dispositif de mise sous tension de la structure de renfort 20, 30, d'éviter tout déplacement des fibres formant cette structure 20.

Le réglage du débit d'injection est fonction de la vitesse de remplissage voulu et nécessaire du volume libre 12 du moule 2 en fonction de différents paramètres tels que les dimensions du volume libre 12, la forme du moule 21, les caractéristiques telles que la viscosité, la masse, la vitesse ou 1e temps de polymérisation de l'élastomère 26 introduit.

Le noyau central 4 et la partie externe 6 du moule 2 sont chauffés pour permettre la polymérisation de l'élastomère 26.

Un préchauffage peut être nécessaire avent l'introduction de l'élastomère 26 pour contrôler et retarder la polymérisation de celui-ci et assurer l'homogénéité de cette polymérisation.

La température ainsi que la durée de chauffage sont également des paramètres qui sont adaptés en fonction des caractéristiques de l'élastomère 26 introduit.

Dans le cas où l'on introduit une résine de polyuréthanne, le moule 2 est porté à une température entre 60 et 100°C, ce qui permet de disposer de 3 à 4 minutes pour le remplissage du moule 2 après le mélange des compositions de base formant l'élastomère 26.

Après démoulage, on obtient une pièce en élastomère dans laquelle la structure de renfort 20, 30 est disposée à une distance donnée des faces de la feuille constituant la pièce, ladite distance étant conférée par la hauteur des éléments de calage 16, 18 sur lesquels a été disposée la structure de renfort 20, 30.

Dans le cas où l'élastomère 26 utilisé est du polyuréthanne, on a constaté que les fibres initialement sèches étaient mouillées et imprégnées par cette résine, alors que de telles fibres mines en oeuvre par les procédés actuels restent sèches, ce qui explique que l'on rencontre des problèmes lors des découpes du matériau ou lorsque l'on utilise un tel matériau avec un gaz.

La pièce obtenue par le procédé de l'invention se présente sous la forme d'une feuille en matériau composite monobloc, dont la forme générale s'apparente à celle du volume libre 12 du moule 2, mais qui conserve la souplesse que lui confère l'élastomère 26 et présente une résistance améliorée par la présence de la structure de renfort 20, 30 noyée selon des paramètres préalablement déterminés et ce, pour une épaisseur finale plus faible que l'épaisseur minimale obtenue avec le procédé actuel pour une même résistance à la traction.

L'épaisseur finale que l'on peut atteindre peut être comprise entre 2 et 5 mm, avec une faible tolérance par rapport à l'épaisseur voulue, quand les procédés actuels ne permettent pas d'obtenir des épaisseurs inférieures à 3 mm.

A titre d'exemple, l'épaisseur finale d'une pièce en forme de feuille en polyuréthanne selon l'invention, comprenant deux couches de tissu totalisant une épaisseur comprise entre 1,2 et 1,4 mm, est comprise entre 3 et 3,5 mm, ce qui représente un gain de 30 à 50% par rapport aux pièces obtenues par le procédé actuel pour la même. résistance.

Le procédé selon l'invention permet d'obtenir en conséquence des pièces composites plus légères et de densité moindre, de l'ordre de 1 au lieu de 1,3.

Il est également important de noter que les temps de fabrication peuvent, en fonction de la nature des pièces composites fabriquées, être divisés par deux par rapport au procédé manuel actuel, ce qui présente un avantage économique indéniable qui se combine à celui des économies réalisées sur le coût de la main d'oeuvre et de la matière première.

Bien entendu, l'invention n'est pas limitée aux exemples décrits ci-dessus et on peut y apporter très facilement des variantes d'exécution en fonction des pièces mécaniques que l'on souhaite réaliser.

On peut par exemple envisager des formes de moule nombreuses et variées, pour imprimer les formes correspondantes aux pièces en élastomère renforcées souhaitées.

Il est ainsi possible de fabriquer des pièces dont l'épaisseur peut varier au sein d'une même pièce, en employant des empreintes, définissant le volume libre du moule, adaptées pour ce faire.

Il est également possible d'envisager de disposer la structure de renfort sur toute ou partie des deux empreintes définissant le volume libre du moule.

De la même manière, il est possible de façonner la structure de renfort, et en particulier à ses extrémités, de telle sorte à conférer à la pièce une finition adaptée à l'utilisation ultérieure ; il est ainsi possible de doter chacune des extrémités de ladite structure de renfort d'un talon susceptible de recevoir un élément de fixation par exemple.

## Revendications

1. Procédé de fabrication d'une pièce mécanique souple en forme de feuille en élastomère, renforcée par une structure interne (20, 30) sous forme de fibres, ce procédé comprenant les étapes suivantes :
- on dispose la structure de renfort (20,30) à l'intérieur du volume libre (12) d'un moule (2), ce moule (2) comprenant au moins deux parties (4,6) définissant, par leur empreinte respective (8, 10) ledit volume libre {12) ;
- on met en oeuvre des moyens pour maintenir la structure de renfort (20,30) à une distance donnée d'au moins une des empreintes (8,10) ;
- on introduit l'élastomère (26) sous forme liquide à l'intérieur du volume libre (12) ;
- on procède à la cuisson de l'élastomère (26) ;
- on extrait du moule (2) la pièce élastomère renforcée ainsi obtenue,
**caractérisé en ce que**, les deux parties (4, 6) du moule (2) étant constituées d'une partie externe (6) et d'un noyau central (4) dont l'empreinte (8) comporte des éléments de calage (16,18), l'on dispose la structure de renfort (20,30) sur lesdits éléments de calage (16,18),
et l'on maintient la structure de renfort (20,30) en la mettant sous tension.

2. Procédé de fabrication selon la revendication 1, **caractérisé en ce que** l'on enroule l'une des extrémités (42) de la structure de renfort (30) autour d'une pièce de fixation (36).

3. Procédé de fabrication selon la revendication 1 ou 2, **caractérisé en ce que** l'on introduit l'élastomère (26) par injection sous faible pression.

4. Procédé de fabrication selon l'une des revendications 1 à 3, **caractérisé en ce que** l'on utilise un élastomère (26) comprenant au moins une résine thermodurcissable.

5. Procédé de fabrication selon la revendication 4, **caractérisé en ce que** l'on utilise une résine de polyuréthanne.

6. Procédé de fabrication selon l'une quelconque des revendications 1 à 5, **caractérisé en ce que** l'on utilise, comme structure de renfort (20,30), des fibres sèches aramides.

7. Moule pour la fabrication d'une pièce souple en forme de feuille en élastomère renforcée, ce moule (2) comprenant un noyau central (4) et une partie externe (6) qui définissent, par leur empreinte respective (8), (10), un volume libre (12) à l'intérieur duquel la structure de renfort (20,30) est destinée à être disposée et l'élastomère (26) est destiné à être introduit sous forme liquide, l'empreinte (8) du noyau central (4) comportant des éléments de calage (16,18) s'étendant en saillie à partir de ladite empreinte (8), **caractérisé en ce qu'**il comporte un dispositif permettant la mise sous tension de la structure de renfort.

8. Moule selon la revendication 7, **caractérisé en ce que** la hauteur des éléments de calage (16,18) mesurée en section transversale à partir de l'empreinte (8,10) est comprise entre la moitié et le tiers de l'épaisseur du volume libre (12) du moule (2).

9. Pièce mécanique souple en forme de feuille en élastomère telle qu'obtenue par le procédé selon l'une des revendications 1 à 6, renforcée par une structure interne (20,30) sous forme de fibres, la structure de renfort (20,30) étant noyée et mouillée par un matériau élastomère (26) monobloc dont les dimensions extérieures déterminent celles de la pièce, et disposée à des distances prédéterminées des dites dimensions extérieures, lesdites distances étant obtenues avec une tolérance de 10% maximal.

10. Pièce mécanique selon la revendication 9, **caractérisée en ce que** son épaisseur est comprise entre 3 et 3,5 mm.

11. Pièce mécanique selon la revendication 9 ou 10, **caractérisée en ce que** l'élastomère (26) est une résine de polyuréthanne.

## Patentansprüche

1. Verfahren zur Herstellung eines nachgiebigen mechanischen Teils in Form einer Elastomerbahn, die durch eine innere Struktur (20, 30) in Form von Fasern verstärkt ist, wobei das Verfahren die folgenden Schritte aufweist:
- das Anordnen der Verstärkungsstruktur (20, 30) im Inneren des freien Volumens (12) einer Form (2), wobei die Form (2) mindestens zwei Teile (4, 6) aufweist, die mit ihrer jeweiligen Formflächen (8, 10) das freie Volumen (12) bilden;
- das Anwenden von Einrichtungen zum Halten der Verstärkungsstruktur (20, 30) in einem bestimmten Abstand von mindestens einer der Formflächen (8, 10);
- das Einbringen des Elastomers (26) in flüssiger Form in das Innere des freien Volumens (12);
- das anschließende Härten/Vulkanisieren des Elastomers (26);
- das Entnehmen des derart erhaltenen verstärkten elastomeren Teils aus der Form (2),
**dadurch gekennzeichnet, daß** die beiden Teile (4, 6) der Form (2) aus einem äußeren Teil (6) und einem mittigen Kern (4) bestehen, dessen Formfläche (8) Keilelemente (16, 18) aufweist, wobei die Verstärkungsstruktur (20, 30) auf den Keilelementen (16, 18) angeordnet werden, und wobei die Verstärkungsstruktur (20, 30) gehalten wird, indem sie gespannt wird.

2. Herstellungsverfahren nach Anspruch 1, **dadurch gekennzeichnet, daß** eines der Enden (42) der Verstärkungsstruktur (30) um ein Fixierteil (36) gewickelt wird.

3. Herstellungsverfahren nach Anspruch 1 oder 2, **dadurch gekennzeichnet, daß** das Elastomer (26) durch Einspritzen mit niedrigem Druck eingebracht wird.

4. Herstellungsverfahren nach einem der Ansprüche 1 bis 3, **dadurch gekennzeichnet, daß** ein Elastomer (26) mit mindestens einem wärmehärtbaren Harz verwendet wird.

5. Herstellungsverfahren nach Anspruch 4, **dadurch gekennzeichnet, daß** ein Polyurethanharz verwendet wird.

6. Herstellungsverfahren nach einem der Ansprüche 1 bis 5, **dadurch gekennzeichnet, daß** als Verstärkungsstruktur (20, 30) trockene Aramidfasern verwendet werden.

7. Form zur Herstellung eines nachgiebigen Teils in Form einer verstärkten Elastomerbahn, wobei die Form (2) einen mittigen Kern (4) und einen äußeren Teil (6) aufweist, die durch ihre jeweilige Formfläche (8), (10)ein freies Volumen (12) begrenzen, in dessen Inneres die Verstärkungsstruktur (20, 30) angeordnet und das Elastomer (26) in flüssiger Form eingeleitet werden soll, wobei die Formfläche (8) des mittigen Kerns (4) Keilelemente (16, 18) aufweist, die von der Formfläche (8) abstehen, **dadurch gekennzeichnet, daß** sie eine Vorrichtung aufweist, die ein Spannen der Verstärkungsstruktur ermöglicht.

8. Form nach Anspruch 7, **dadurch gekennzeichnet, daß** die Höhe der Keilelemente (16, 18), gemessen im Querschnitt von der Formfläche (8, 10) aus, zwischen der Hälfte und einem Drittel der Breite des freien Volumens (12) der Form (2) beträgt.

9. Nachgiebiges mechanisches Teil in Form einer Elastomerbahn, wie sie durch das Verfahren nach einem der Ansprüche 1 bis 6 erhalten wird, die durch eine innere Verstärkungsstruktur (20, 30) in Form von Fasern verstärkt ist, wobei die Verstärkungsschicht (20, 30) in ein einteiliges Elastomermaterial (26) eingebettet und von diesem benetzt ist, dessen Außenabmessungen diejenigen des Teils bestimmen, und wobei die Struktur in vorbestimmten Abständen von den Außenabmessungen angeordnet ist, wobei die Abstände mit einer Toleranz von maximal 10% erhalten werden.

10. Mechanisches Teil nach Anspruch 9, **dadurch gekennzeichnet, daß** seine Breite zwischen 3 und 3,5 mm liegt.

11. Mechanisches Teil nach Anspruch 9 oder 10, **dadurch gekennzeichnet, daß** das Elastomer (26) ein Polyurethanharz ist.

## Claims

1. Method for manufacturing a flexible mechanical part in the form of an elastomer sheet, reinforced by an internal structure (20, 30) in the form of fibres, this method comprising the following steps:
- the reinforcing structure (20, 30) is arranged inside the free space (12) of a mould (2), this mould (2) comprising at least two portions (4, 6) defining, by their respective indentation (8, 10), said free space (12);
- means are employed in order to maintain the reinforcing structure (20, 30) at a given distance from at least one of the indentations (8, 10);
- the elastomer (26) is introduced in liquid form inside the free space (12) ;
- the elastomer (26) is cured;
- the reinforced elastomer part thus obtained is removed from the mould (2),
**characterised in that**, as the two portions (4, 6) of the mould (2) consist of an external portion (6) and a central core (4), the indentation (8) of which comprises wedging elements (16, 18), the reinforcing structure (20, 30) is arranged on said wedging elements (16, 18),
and the reinforcing structure (20, 30) is maintained by being placed under tension.

2. Manufacturing method according to claim 1, **characterised in that** one of the ends (42) of the reinforcing structure (30) is wound around a fixing part (36).

3. Manufacturing method according to either claim 1 or claim 2, **characterised in that** the elastomer (26) is introduced by means of mild pressure injection.

4. Manufacturing method according to any one of claims 1 to 3, **characterised in that** an elastomer (26) comprising at least one thermosetting resin is used.

5. Manufacturing method according to claim 4, **characterised in that** a polyurethane resin is used.

6. Manufacturing method according to any one of claims 1 to 5, **characterised in that** dried aramid fibres are used as the reinforcing structure (20, 30).

7. Mould for manufacturing a flexible part in the form a reinforced elastomer sheet, this mould (2) comprising a central core (4) and an external portion (6) that define, by their respective indentation (8, 10), a free space (12), inside which the reinforcing structure (20, 30) is intended to be arranged and the elastomer (26) is intended to be introduced in liquid form, the indentation (8) of the central core (4) comprising wedging elements (16, 18) protruding from said indentation (8), **characterised in that** it comprises a device allowing the reinforcing structure to be placed under tension.

8. Mould according to claim 7, **characterised in that** the height of the wedging elements (16, 18), measured in cross section from the indentation (8, 10), is between one half and one third of the thickness of the free space (12) of the mould (2).

9. Flexible mechanical part in the form of an elastomer sheet as obtained by the method according to any one of claims 1 to 6, reinforced by an internal structure (20, 30) in the form of fibres, the reinforcing structure (20, 30) being embedded and steeped in a one-piece elastomer material (26), the external dimensions of which determine those of the part, and arranged at predetermined distances from said external dimensions, said distances being obtained with a maximum tolerance of 10 %.

10. Mechanical part according to claim 9, **characterised in that** it is between 3 and 3.5 mm thick.

11. Mechanical part according to either claim 9 or claim 10, **characterised in that** the elastomer (26) is a polyurethane resin.
